# EUROPÄISCHE PATENTANMELDUNG

(11) **EP 0 768 517 A2**
(43) Veröffentlichungstag der Anmeldung: **16.04.1997**
(21) Anmeldenummer: 96115923.3
(22) Anmeldetag: 04.10.1996
(51) Int. Cl.: G01J 3/14

(54) **Spektralapparat vom konzentrischen Typ mit Féry-Prisma**

(30) Priorität: 12.10.1995 DE 19537949
(71) Anmelder: Carl Zeiss, D-89518 Heidenheim (Brenz) (DE); CARL-ZEISS-STIFTUNG, HANDELND ALS CARL ZEISS, D-89518 Heidenheim (Brenz) (DE); AEROSPATIALE Société Nationale Industrielle, 75781 Paris Cédex 16 (FR)
(72) Erfinder: Bittner, Reinhold, 73529 Schwäbisch Gmünd (DE); Cerutti-Maori, Guy, Aérospatiale Espace & Defense, 06322 Cannes la Bocca (FR); Delclaud, Yves, Aérospatiale Espace & Defense, 06322 Cannes la Bocca (FR); Labandibar, Jean-Yves, Aérospatiale Espace & Def., 06322 Cannes la Bocca (FR)

(57) **Zusammenfassung**

Bei einem konzentrischen Spektrometer des vom Offner-Spiegelobjektiv abgeleiteten Typs ist das übliche Gitter durch ein oder mehrere gekrümmte Prismen, bekannt als Féry-Prismen (6, 61, 62, 63), ersetzt. Abweichungen von der konzentrischen Form werden als Korrekturmittel genutzt. Als abbildendes Spektrometer mit Detektorarray besonders geeignet, da das zweidimensionale Bild in Richtung der Ortskoordinate wie der Spektralkoordinate ohne Verzerrungen und Krümmungen ausgebildet werden kann.

## Beschreibung

Die Erfindung betrifft einen Spektralapparat mit folgenden im Strahlengang nacheinander angeordneten optischen Elementen:
a) einem Eintrittsspalt
b) einem ersten Konkavspiegel
c) einem Konvexspiegel
d) einem zweiten Konkavspiegel
e) einer Bildfläche
wobei zwischen dem ersten und zweiten Konkavspiegel ein dispersives Element angeordnet ist.

Aus Lobb, D. R., "Theory of concentric designs for grating spectrometers" Applied Optics 33 (1994), 2648-2658 ist derartiges als abbildendes Spektrometer bekannt, bei dem das dispersive Element ein auf den Konvexspiegel aufgebrachtes Gitter ist. Die Ableitung von einem konzentrischen Offner-Abbildungsobjektiv wird beschrieben. Wegen der Überlagerung verschiedener Beugungsordnungen ergeben sich bei großem Spektralbereich bei Gitterspektrometern Schwierigkeiten. Gekrümmte Prismen als dispersives Element von Spektralapparaten, nämlich Spektrometern und Monochromatoren, sind bekannt, z.B. aus dem Deutschen Reichspatent 441 595, und zwar unter der Bezeichnung Féry-Prismen. Sie haben üblicherweise sphärische Flächen und eine davon ist verspiegelt.

Wilson, R. N. "Die Anwendung von aplanatischen Prismen in Monochromatoren und Spektrographen", Optik 29 (1969), 17-29 beschreibt das Féry-Prisma auch in Kombination mit einem sphärischen Konkavspiegel (dann "Luftprisma" genannt). Die Kombination mehrerer hintereinandergeschalteter Prismen und Prismen-Gitter-Kombinationen werden erwähnt.

Der erfindungsgemäße Spektralapparat soll als abbildendes Spektrometer mit großer spektraler Bandbreite geeignet sein. Auf einen einfachen und robusten Aufbau wird Wert gelegt.

Ein gattungsgemäßer Spektralapparat, bei dem das dispersive Element aus einem oder mehreren gekrümmten Prismen besteht, löst diese Aufgabe.

Die Erfindung geht dabei von der Erkenntnis aus, daß die Tatsache, daß ein Féry-Prisma wie ein Konkavgitter einen Rowland-Kreis aufweist, seine Substitution in einem konzentrischen Spektrometer vom Offner-Typ zuläßt.

Die Ausführungsformen gemäß den Unteransprüchen prägen die Eignung zur Lösung der Aufgabe weiter aus.

Nach Anspruch 2 werden das oder die Prismen vor und nach dem Konvexspiegel insgesamt zweimal vom Strahlengang durchlaufen. Entsprechend groß ist der dispersive Effekt. Der Konvexspiegel kann vorzugsweise auf einer Prismenfläche des dispersiven Elements ausgebildet sein, es ist hier jedoch auch ein Luftspalt möglich, dann erhöht sich aber die Zahl der zu justierenden Teile. In der Regel liegen der erste und zweite Konkavspiegel auf einer gemeinsamen Sphäre, sie können auch zu einem Teil vereint sein. Dies ist auch bei dem konzentrischen Gitterspektrometer nach Lobb a.a.O. und beim Offner-Objektiv so vorgesehen. Zu Korrekturzwecken kann jedoch auch eine unabhängige Ausbildung beider Konkavspiegel mit unterschiedlichen Radien und/oder Krümmungsmittelpunkten wie auch eine asphärische Form vorgesehen werden.

Gemäß den Ansprüchen 5 und 6 sind sphärische gekrümmte Prismen, insbesondere Féry-Prismen vorgesehen. Diese sind praktisch außerzentrische Abschnitte sphärischer Linsen und gut herstellbar. Für besondere Korrekturen können jedoch auch asphärische, z.B. torische Flächen vorgesehen werden.

Durch die Kombination mehrerer gekrümmten Prismen, wie schon im Hauptanspruch vorgesehen, kann die Dispersion des in der Bildfläche erzeugten Spektrums linearisiert werden. Anspruch 7 gibt die dabei bevorzugte Ausführung mit 2-3 spaltlos aneinandergefügten Prismen an.

Der primäre Verwendungszweck der Erfindung ist das abbildende Spektrometer, demgemäß ist in Anspruch 8 in der Bildfläche ein zweidimensionaler Bilddetektor vorgesehen. Die Bildfläche muß dementsprechend eben sein. Als Bilddetektoren kommen alle erhältlichen in Frage, die die gewünschte örtliche und zeitliche Auflösung mit der erforderlichen spektralen Bandbreite und Empfindlichkeit vereinigen. Ein Beispiel sind CCD-Arrays. Im übrigen sind diese Bauelemente in der Spektrometrie, der Videotechnik usw. bekannt und verbreitet.

Anspruch 9 sieht vor, daß der Abstand des Konvexspiegels vom ersten Konkavspiegel das 0,4- bis 0,6-fache, vorzugsweise das 0,5-fache des Radius des ersten Konkavspiegels beträgt. Anspruch 10 bestimmt den Radius des Konvexspiegels zum 0,4- bis 0,6-fachen, insbesondere zum 0,5-fachen des Radius des ersten Konkavspiegels. Ansprüche 11 und 12 geben entsprechende Bedingungen in Bezug auf den zweiten Konkavspiegel. Dabei liegt dann bevorzugt der Brennpunkt des ersten Konkavspiegels im dispersiven Element. Dabei ist der Fall eingeschlossen, daß er auf dem auf eine Prismenfläche ausgebildeten Konvexspiegel liegt.

Anspruch 14 sieht vor, daß die Krümmungsmittelpunkte aller Spiegel nahe beieinander liegen. Insgesamt führen die Ansprüche 9-14 dazu, daß ein konzentrisches Spektrometer gemäß Anspruch 15 vorliegt, mit der bekannt guten Eignung als abbildendes Spektrometer. Die angegebenen Toleranzen ergeben die Möglichkeit, abweichend von der Grundform unter Berücksichtigung der Prismenwirkungen Korrekturen vorzusehen. Weitere Verbesserungen können Korrekturlinsen bringen, die in Anspruch 16 vorgesehen sind.

Ist die nützliche spektrale Bandbreite des Spektrometers größer als die verfügbarer Detektoren, dann kann ein vor der Bildfläche angeordneter dichroitischer Spiegel gemäß Anspruch 17 einen Spektralbereich auf eine zweite Bildfläche ablenken, wo ein Detektor mit passender Empfindlichkeit angebracht wird.

Anspruch 18 weist darauf hin, daß die Konstruktion von einem Offner-Objektiv abgeleitet ist.

Gemäß Anspruch 19 kann die Erfindung auch vorteilhaft mit einem Gitter kombiniert werden. Dieses kann auf einem der Spiegel als Korrekturmittel ausgebildet sein oder auch der ganzen Anordnung nachgeschaltet werden, die dann als Vorzerleger dient.

Näher erläutert wird die Erfindung anhand von Ausführungsbeispielen, die in der Zeichnung dargestellt sind.

Es zeigen:
- Figur 1: im schematischen Schnitt ein Beispiel für die Grundform des Féry-Offner-Spektrometers mit einem Féry-Prisma;
- Figur 2: in entsprechender Darstellung ein Beispiel mit zwei Féry-Prismen zur Linearisierung der Dispersion;
- Figur 3: eine Version mit Luftspalt zwischen Prismen und Konkavspiegel und mit Korrekturlinsen;
- Figur 4: eine Version mit drei Prismen und zwei Korrekturlinsen;
- Figur 5: eine Version mit drei Prismen, eingangsseitiger Blende und ausgangsseitigem dichroitischen Teilspiegel und zwei Bildflächen;
- Figur 6a-f: die räumliche Verteilung in Richtung der Spalthöhe des Bilds eines Pixels im Vergleich zum exakten Bild für verschiedene Wellenlängen auf den beiden Bildflächen;
- Figur 7a-f: die spektrale Verteilung per Pixel im Vergleich zum exakten Bild für verschiedene Wellenlängen auf den beiden Bildflächen;
- Figur 8a,b: den Verlauf der Lineardispersion für den SWIR- und den VNIR-Bereich.

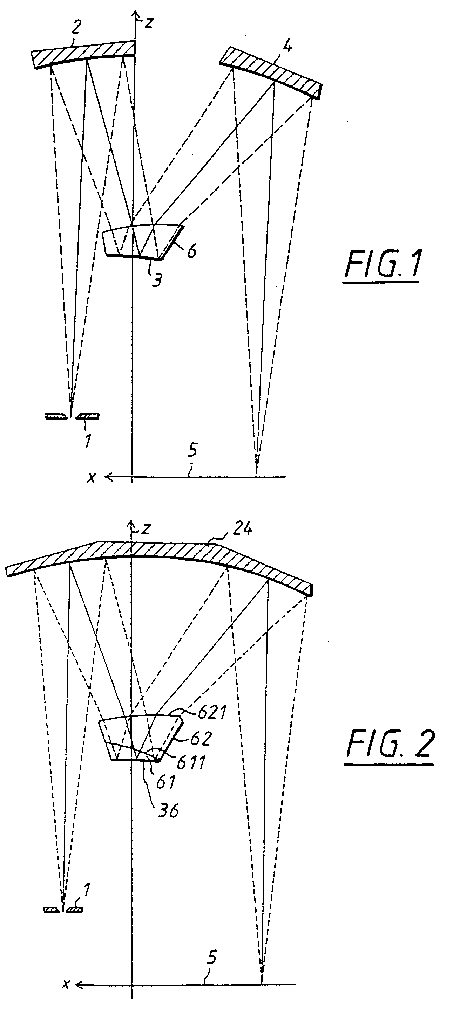

Ein Beispiel für die Grundform des erfindungsgemäßen Féry-Offner-Spektrometers zeigt Figur 1. Z bezeichnet die Bezugsachse. Ein Eintrittsspalt von bis zu 12 mm (± 6 mm) Höhe liegt 20,00 mm seitlich von Z. Der erste Konkavspiegel 2 liegt auf der Bezugsachse A in 150,00 mm Distanz, hat einen Radius von -161,77 mm und ist um -1,81° verkippt, d.h. der Krümmungsmittelpunkt liegt rechts von Z (4,6 mm). Die erste Fläche 601 des Féry-Prismas 6 liegt auf Z um -70,700 mm zurück, hat den Radius -92,763 mm und ist um -10,00° verkippt, der Prismenwinkel ist also 10°. Das Féry-Prisma 6 besteht aus Glas BK7 von Schott. Die rückwärtige Fläche davon ist mit dem Konvexspiegel 3 vereinigt. Der Abstand auf Z ist -11,906 mm, der Radius - 79,757 mm und der Kippwinkel verschwindet, der Krümmungsmittelpunkt liegt auf Z. Die Blende des Systems liegt auf diesem Konvexspiegel 3. Die objektseitige numerische Apertur ist 0,10. Der Abstand der Krümmungsmittelpunkte des ersten Konkavspiegels 2 und des Konvexspiegels 3 beträgt ca. 5 mm oder ca. 3 % des Radius des ersten Konkavspiegels 2.

Der zweite Konkavspiegel 4 liegt auf der gleichen Sphäre wie der erste Konkavspiegel 2, hat also die gleichen Bestimmungsstücke und kann mit diesem zu einem Teil vereinigt sein. Lediglich die ausgeleuchteten Bereiche unterscheiden sich. Die Bildfläche 5 liegt auf der Bezugsachse Z um -170,88 mm zurückversetzt, gegenüber der Objektebene - dem Eintrittsspalt 1 - um 20,88 mm zurückversetzt und um 1,00° nach recht fallend gekippt.

Auf der Bildfläche 5 wird so ein Spektralbild mit einer Ortsachse entsprechend der Spalthöhenkoordinate und einer Spektralachse dazu senkrecht erzeugt, das für kommerzielle Array-Detektoren ausreichend eben und geometrisch verzerrungsfrei ist. Der Wellenlängenmaßstab ist aber mit einem einzelnen Prisma zwangsläufig nichtlinear, wegen des entsprechenden Verlaufs der Lineardispersion des Glases.

Dieses Problem ist aber durch Kombination mehrerer Féry-Prismen aus verschiedenem Material lösbar. Figur 2 ist ein Beispiel mit zwei Prismen 61 und 62. Der Konvexspiegel ist als Beschichtung 36 des ersten Prismas 61 ausgeführt. Die zwei Konkavspiegel sind explizit zu einer Einheit 24 vereinigt dargestellt. Tabelle 1 zeigt die Daten dieser Version.

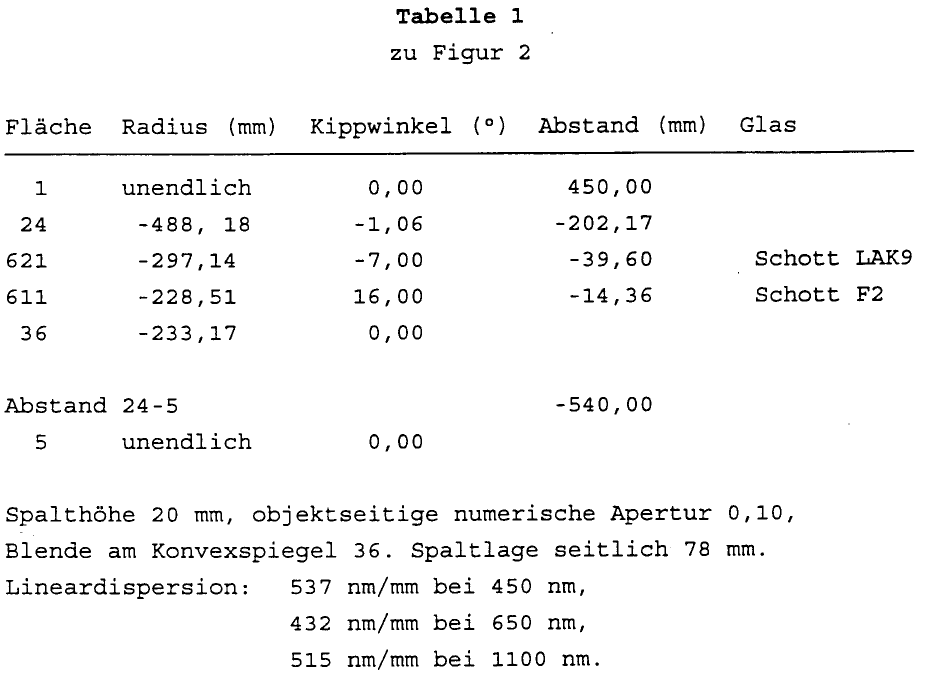

Die Lineardispersion ist bei diesem Beispiel also wesentlich stabilisiert worden.

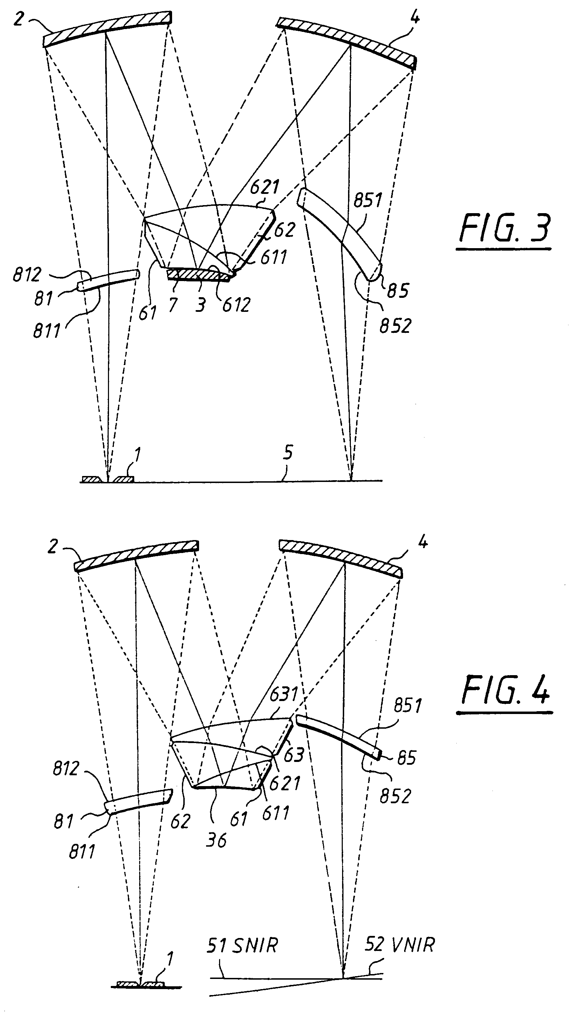

Das Beispiel der Figur 3 weist ebenfalls zwei Prismen 61 und 62 auf, jetzt aber mit Luftspalt 7 zum Konvexspiegel 3. Zudem sind zwei Korrekturlinsen 81, 85 vorgesehen. Die Daten sind in Tabelle 2 angegeben.

**Tabelle 2**

| zu Figur 3 | | | | |
|---|---|---|---|---|
| Fläche | Radius (mm) | Kippwinkel (°) | Abstand (mm) | Glas |
| 1 | unendlich | 0,00 | 202,03 | |
| 811 | -279,35 | 0,00 | 7,46 | Schott Ultran 30 |
| 812 | -332,42 | 0,00 | 240,51 | |
| 2 | -452,60 | - 2,38 | -182,76 | |
| 621 | -222,88 | -10,46 | - 26,00 | Quarz |
| 611 | -182,06 | 26,09 | - 33,00 | Schott Ultran 30 |
| 612 | -170,55 | 0,00 | - 1,50 | |
| 3 | -206,99 | 0,00 | | |
| 4 | mit 2 identisch | | -130,00 | |
| 851 | -226,21 | 0,00 | - 17,40 | Schott Ultran 30 |
| 852 | -205,78 | 0,00 | -303,47 | |
| 5 | unendlich | 0,00 | | |
| Spalthöhe 30 mm, objektseitige numerische Apertur 0,13, Blende am Konvexspiegel 3, Spaltlage seitlich 69 mm. | | | | |

Das folgende Beispiel der Figur 4 betrifft ein Spektrometer, das gleichzeitig für die Spektralbereiche VNIR (Visible-Near Infra Red) von 450-1100 nm und SWIR (Short Wave Infra Red) von 1100-2350 nm geeignet ist. Die Bildfläche 51, 52 ist für beide Spektralbereiche verschieden. Es werden auch verschiedene Detektoren gebraucht, da keine mit der gesamten Bandbreite erhältlich sind. Die Detektoren können nach Bedarf, z.B. mit einer Schwenkvorrichtung, alternativ eingesetzt werden. Auch kann nach der Korrekturlinse 85 ein dichroitischer Teilerspiegel vorgesehen werden, durch den die beiden Bildflächen 51, 52 getrennt werden, so daß beide simultan mit einem Detektor versehen werden können.

Zur ausreichenden Linearisierung der Lineardispersion über den erweiterten Spektralbereich sind nun drei Féry-Prismen 61, 62, 63 vorgesehen. Tabelle 3 zeigt die Konstruktionsdaten dieses Beispiels.

**Tabelle 3**

| zu Figur 4 | | | | |
|---|---|---|---|---|
| Fläche | Radius (mm) | Kippwinkel (°) | Abstand (mm) | Glas |
| 1 | unendlich | 0,00 | 190,74 | |
| 811 | -363,96 | 0,00 | 13,09 | Schott Ultran 30 |
| 812 | -388,22 | 0,00 | 246,17 | |
| 2 | -459,99 | - 0,86 | -183,14 | |
| 631 | -284,97 | -11,21 | - 20,00 | Quarz |
| 621 | -276,63 | 8,74 | - 33,00 | Schott Ultran 30 |
| 611 | -260,74 | -22,26 | - 12,00 | Quarz |
| 36 | -222,35 | 0,00 | | |
| 4 | mit 2 identisch | | -162,00 | |
| 851 | -289,15 | 0,00 | - 9,00 | Schott Ultran 30 |
| 852 | -279,03 | 0,00 | | |
| 51 | unendlich | -1,06 | -279,22 | SWIR |
| 52 | unendlich | -6,34 | -291,01 v.852 | VNIR |
| Spalthöhe 30 mm, objektseitige numerische Apertur 0,13 Blende am Konvexspiegel 36, Spaltlage seitlich 75,00 mm. | | | | |

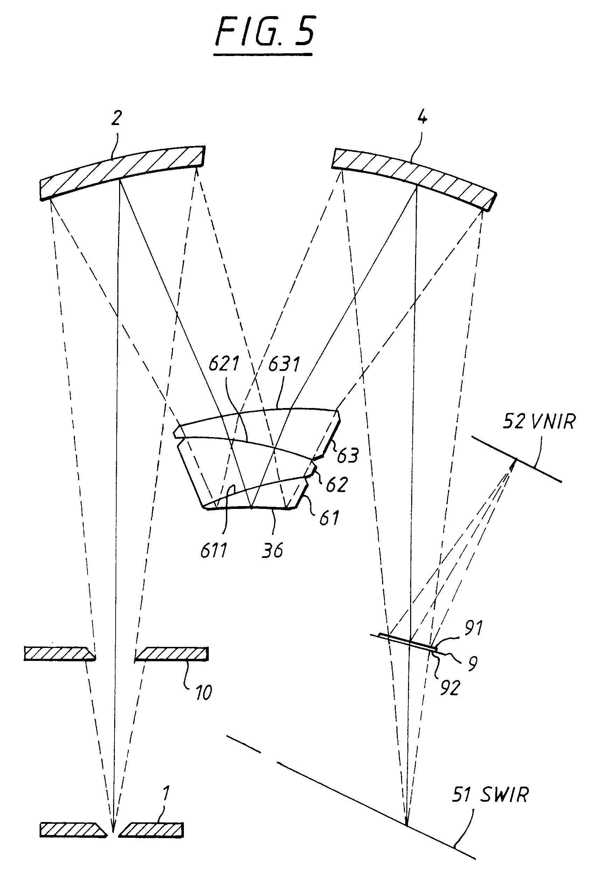

Figur 5 zeigt ein Beispiel mit der gleichen spektralen Bandbreite wie Figur 4 und mit ebenfalls drei Prismen 61, 62, 63. Ein dichroitischer Spiegel 9 ist explizit vorgesehen, entsprechend gibt es zwei Bildflächen 51 für SWIR, 52 für VNIR. Korrekturlinsen sind entfallen, da ihre Funktion durch die starke Schräglage der Bildflächen 51,52 ersetzt wird. Die Aperturblende 10 liegt hier zwischen dem Eintrittsspalt 1 und dem ersten Konkavspiegel 2.
Tabelle 4 gibt die Konstruktionsdaten.

**Tabelle 4**

| zu Figur 5 | | | | |
|---|---|---|---|---|
| Fläche | Radius (mm) | Kippwinkel (°) | Abstand (mm) | Glas |
| 1 | unendlich | 0,000 | 138,000 | |
| 10 | Blende | 0,000 | 402,000 | |
| 2 | -527,908 | -0,432 | -201,667 | |
| 631 | -342,357 | -6,977 | - 24,000 | Quarz |
| 621 | -274,006 | 9,034 | - 39,600 | Schott PK51A |
| 611 | -301,253 | -17,414 | - 14,400 | Quarz |
| 36 | -241,883 | 0,000 | | |
| 4 | mit 2 identisch | | -351,098 | |
| 91 | unendlich | 15,000 | - 3,000 | Quarz |
| | | | (dichroitisch beschichtet) | |
| 92 | unendlich | 15,000 | | |
| 51 | unendlich | 25,065 | -116,923 von | 92 für SWIR |
| 52 | unendlich | 25,297* | -115,159 von | 91 für FNIR |

| | | | | |
|---|---|---|---|---|
| * Reflexion an 91 unberücksichtigt | | | | |
| Spalthöhe 30 mm, objektseitige numerische Apertur 0,13, Spaltlage seitlich 110,00 mm. | | | | |

Quarz und Glas PK51A haben geeignete Dispersionseigenschaften bei hoher Transparenz im gesamten Spektralbereich, nur bei PK51A sinkt die Transmission oberhalb von 2 µm auf ungefähr 90 %. Als Spiegel dienen geschützte Silberschichten. Magnesiumfluorid-Einzelschichten sind zur Entspiegelung vorgesehen.

Als dichroitischer Teilerspiegel 9 ist eine Beschichtung auf Quarz von der Firma Balzers (Liechtenstein) vorgesehen, die bis 1000 nm hochreflektierend (460 nm - 900 nm weniger als 4 % transmittierend) und oberhalb 1000 nm transmittierend ist (1100 nm - 2400 nm mehr als 90 % transmittierend), und zwar bei bis zu 30° Einfallswinkel und für alle Polarisationsrichtungen. Der Bereich um 1100 nm wird auf beide Bildflächen 51, 52 verteilt.

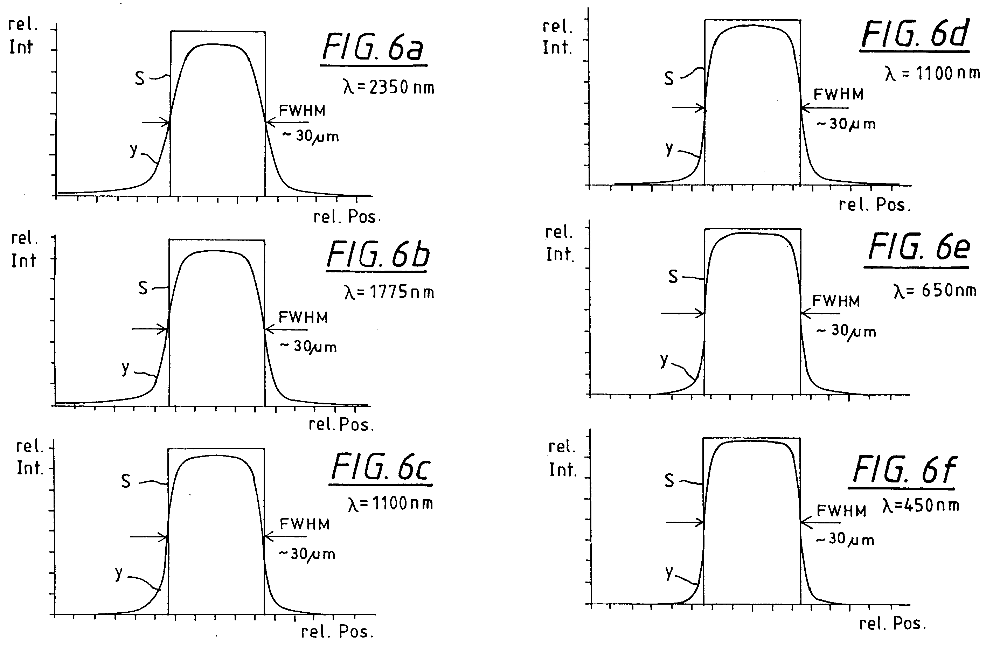

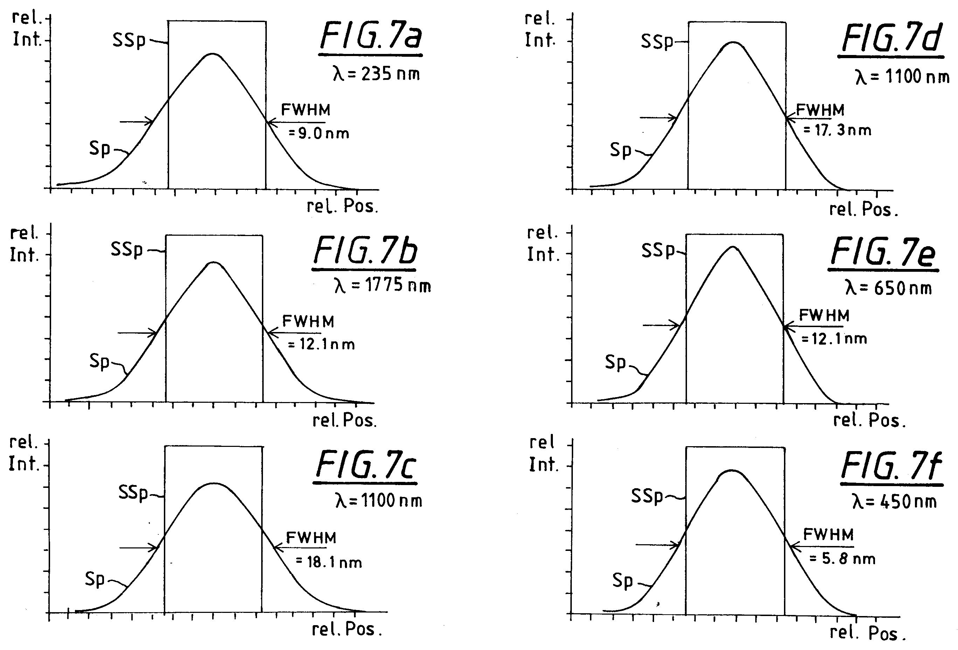

Die erreichte gute Qualität wird durch die folgenden Figuren 6a-f und 7a-f belegt. Fig. 6a-f zeigt die räumliche Punktverteilungsfunktion Y auf einem Pixel der Detektoren von jeweils 30µm geometrischer Ausdehnung in Richtung der Orts- und der Spektralkoordinate. Fig. 6a-c gilt dabei für den SWIR-Detektor in der Bildfläche 51, Fig. 6d-e für den VNIR-Detektor in der Bildfläche 52. Mit S bezeichnet ist jeweils das theoretische (Schatten-)Bild. Die Kurve Y ist jeweils über mehrere Feldhöhen, d.h. Lagen im Spalt 1, gemittelt. Die Halbwertsbreite der Kurve Y ist jeweils FWHM = 30 µm, also gerade das Pixelmaß.

In Fig. 7a-f ist die spektrale Punktverteilungsfunktion Sp für 30 µm Breite des Eintrittsspalts 1 angegeben. Als SSp ist das theoretische (Schatten-)Bild des geometrisch 30 µm breiten Pixels angegeben. Die spektrale Breite des Pixels ist wellenlängenabhängig. Die Halbwertsbreite FWHM der Kurve Sp ist jeweils im Wellenlängenmaß angegeben und beträgt durchwegs etwa das 1,2-fache der Pixelbreite. Die ausgeprägte Dreiecksform der Kurve Sp resultiert aus der Faltung der Spaltbreite mit der Pixelbreite. Fig. 7a-c gilt wiederum für den SWIR-Detektor in der Bildfläche 51, Fig. 7d-f für den VNIR-Detektor in der Bildfläche 52.

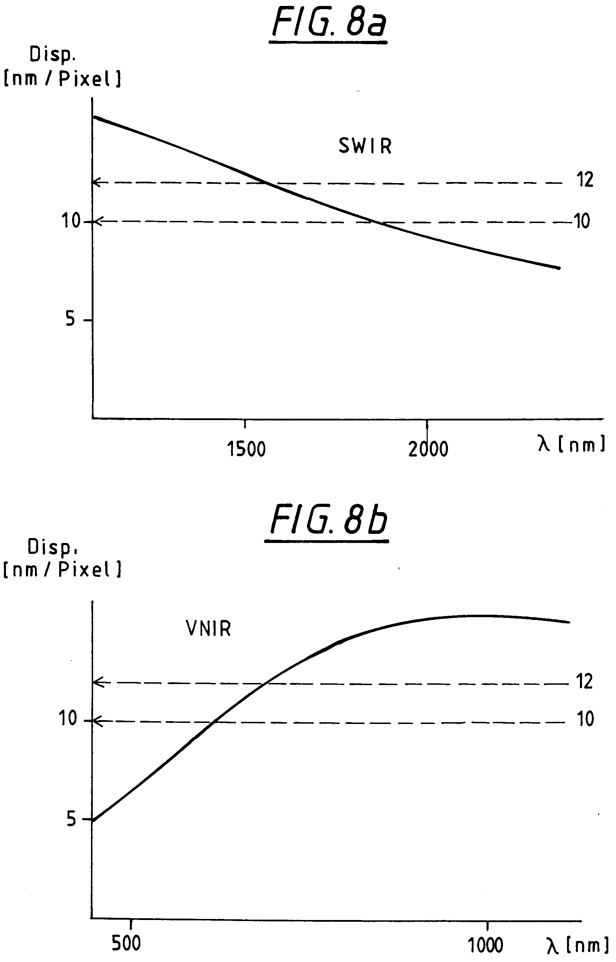

Die Dispersion des Spektrometers ist in Fig. 8a für den SWIR-Bereich, in Fig. 8b für den VNIR-Bereich gezeigt. Im SWIR-Bereich fällt diese etwa linear von 15 nm/Pixel bei 1000 nm Wellenlänge auf etwa 7,5 nm/Pixel bei 2350 nm ab. Im VNIR-Bereich steigt die Dispersion von etwa 5 nm/Pixel bei 450 nm zu etwa 15 nm/Pixel bei 900 nm bis 1100 nm.

Durch maßstäbliche Vergrößerung des gesamten Spektrometers bei beibehaltener Pixelgröße läßt sich die mittlere Dispersion den Bedürfnissen anpassen.

Die wichtigste Qualität eines abbildenden Spektrometers ist seine weitestgehende Verzerrungsfreiheit in der räumlichen und spektralen Koordinate in der Bildebene. Die Tabellen 5 und 6 geben für das Spektrometer gemäß Fig. 5 und Tabelle 4 den räumlichen und den spektralen Registerfehler an. Bezogen auf die Pixelgröße von 30µm sind beide Registerfehler unbedeutend.

**Tabelle 5**

| Feld/Spalt-Höhe(mm) | Änderungen der Höhe der Schwerpunkte der Spotdiagramme für verschiedene Feldpunkte | | | | | | räumlicher Registerfehler |
|---|---|---|---|---|---|---|---|
| | SWIR | | | VNIR | | | |
| | 2350nm | 775nm | 110nm | 1100nm | 650nm | 450nm | |
| 0,74/11,1713 | +0,25µm | -0,7µm | -1,25µm | +0,3µm | 0 | +0,6µm | 1,8µm |
| 1/15,0113 | +0,7µm | -0,7µm | -1,3 µm | +0,5µm | 0 | +0,8µm | 2,1µm |
| Der maximale räumliche Registerfehler ist 2,1 µm. | | | | | | | |

**Tabelle 6**

| Feld/Spalt-höhe(mm) | Abweichung der Schwerpunkte der Spotdiagramme (Punktverteilungsfunktion) von einer geraden Linie | | | | | | räumlicher Registerfehler |
|---|---|---|---|---|---|---|---|
| | SWIR | | | VNIR | | | |
| | 2350nm | 1775nm | 1100nm | 1100nm | 650nm | 450nm | |
| 0,74/11,1713 | +0,2µm | +0,1µm | 0 | -0,9µm | -0,6µm | +0,9µm | 0,9µm |
| 1/15,0113 | +0,3µm | 0 | -0,1µm | -1,6µm | -1,3µm | -0,1µm | 1,6µm |
| Der maximale spektrale Registerfehler ist 1,6 µm. | | | | | | | |

Dargestellt sind hier Designdaten aus der Optikrechnung. Diese ergeben auch unter Berücksichtigung von Fertigungstoleranzen ein hochwertiges abbildendes Spektrometer. Aufgrund seines einfachen Aufbaus mit wenigen Teilen und kompakten Abmessungen ist es besonders für Weltraumanwendungen geeignet. Mit einem vorgeschalteten Scanspiegel und einem Spiegelteleskop ist es für eine spektrale Erderkundungskamera Projekt PRISM der Europäischen Weltraumorganisation ESA vorgesehen. Die Brauchbarkeit ist aber keinesfalls darauf beschränkt.

Die verschiedenen Beispiele belegen die breite Variationsmöglichkeit im Rahmen der Erfindung.

## Patentansprüche

1. Spektralapparat mit den folgenden im Strahlengang nacheinander angeordneten optischen Elementen:
a) einem Eintrittsspalt (1)
b) einem ersten Konkavspiegel (2)
c) einem Konvexspiegel (3)
d) einem zweiten Konkavspiegel (4)
e) einer Bildfläche (5)
wobei zwischen dem ersten und zweiten Konkavspiegel (2, 4) ein dispersives Element angeordnet ist, dadurch gekennzeichnet, daß das dispersive Element aus einem oder mehreren gekrümmten Prismen (6) besteht.

2. Spektralapparat nach Anspruch 1, dadurch gekennzeichnet, daß das dispersive Element (6) im Strahlengang zwischen dem ersten Konkavspiegel (2) und dem Konvexspiegel (3) und im Strahlengang zwischen dem Konvexspiegel (3) und dem zweiten Konkavspiegel (4) angeordnet ist.

3. Spektralapparat nach Anspruch 2, dadurch gekennzeichnet, daß das dispersive Element auf einer Prismenfläche den Konvexspiegel (36) trägt.

4. Spektralapparat nach Anspruch 1, dadurch gekennzeichnet, daß der erste und zweite Konkavspiegel (2, 4) auf einer gemeinsamen Sphäre liegen.

5. Spektralapparat nach Anspruch 1, dadurch gekennzeichnet, daß die Prismen (6) sphärisch gekrümmt sind.

6. Spektralapparat nach Anspruch 5, dadurch gekennzeichnet, daß ein sphärisch gekrümmtes Prisma (6) ein Féry-Prisma ist.

7. Spektralapparat nach Anspruch 1, dadurch gekennzeichnet, daß zwei oder drei sphärisch gekrümmte Prismen (61, 62, 63) ohne zwischenliegendem Luftspalt vorgesehen sind.

8. Spektralapparat nach Anspruch 1, dadurch gekennzeichnet, daß in der Bildfläche (5) ein zweidimensionaler Bilddetektor angeordnet ist und somit ein abbildendes Spektrometer realisiert ist.

9. Spektralapparat nach Anspruch 1, dadurch gekennzeichnet, daß der Abstand des Konvexspiegels (3) vom ersten Konkavspiegel (2) das 0,4- bis 0,6-fache, vorzugsweise das 0,5-fache des Radius des ersten Konkavspiegels (2) beträgt.

10. Spektralapparat nach Anspruch 1, dadurch gekennzeichnet, daß der Radius des Konvexspiegels (3) das 0,4- bis 0,6-fache, vorzugsweise das 0,5-fache des Radius des ersten Konkavspiegels (2) beträgt.

11. Spektralapparat nach Anspruch 1, dadurch gekennzeichnet, daß der Abstand des Konvexspiegels (3) vom zweiten Konkavspiegel (4) das 0,4- bis 0,6-fache, vorzugsweise das 0,5-fache des Radius des zweiten Konkavspiegels (4) beträgt.

12. Spektralapparat nach Anspruch 1, dadurch gekennzeichnet, daß der Radius des Konvexspiegels (3) das 0,4- bis 0,6-fache, vorzugsweise das 0,5-fache des Radius des zweiten Konkavspiegels (4) beträgt.

13. Spektralapparat nach Anspruch 9 und 10, dadurch gekennzeichnet, daß der Brennpunkt des ersten Konkavspiegels (2) im dispersiven Element (6) liegt.

14. Spektralapparat nach Anspruch 1, dadurch gekennzeichnet, daß die Krümmungsmittelpunkte der Konkavspiegel (2) und des Konvexspiegels (3) untereinander Abstände kleiner als das 0,1-fache des größten Radius aufweisen, insbesondere daß die Krümmungsmittelpunkte vereinigt sind.

15. Spektralapparat nach Anspruch 1, dadurch gekennzeichnet, daß der Spektralapparat ein konzentrisches Spektrometer ist.

16. Spektralapparat nach Anspruch 1, dadurch gekennzeichnet, daß zwischen Eintrittsspalt (1) und erstem Konkavspiegel (2) oder zwischen zweitem Konkavspiegel (4) und Bildfläche (5) Korrekturlinsen (81, 85) angeordnet sind.

17. Spektralapparat nach Anspruch 1, dadurch gekennzeichnet, daß zwischen dem zweiten Konkavspiegel (4) und der Bildfläche (51) ein dichroitischer Spiegel (9) angeordnet ist und eine zweite Bildfläche (52) für den reflektierten Spektralbereich entsteht.

18. Spektralapparat nach Anspruch 1, dadurch gekennzeichnet, daß der Aufbau bis auf das dispersive Element einem Offner-Objektiv entspricht.

19. Spektralapparat nach Anspruch 1, dadurch gekennzeichnet, daß ein Beugungsgitter zusätzlich vorgesehen ist.
